# EUROPÄISCHE PATENTSCHRIFT

(11) **EP 1 303 177 B1**
(45) Veröffentlichungstag und Bekanntmachung des Hinweises auf die Patenterteilung: **22.02.2006**
(21) Anmeldenummer: 01955256.1
(22) Anmeldetag: 17.07.2001
(51) Int. Cl.: A01F 29/16

(54) **FELDHÄCKSLER MIT HYDRAULISCH ANGETRIEBENEN EINZUGSORGANEN**
FORAGE HARVESTER WITH HYDRAULICALLY DRIVEN COLLECTING MEMBERS
RAMASSEUSE-HACHEUSE COMPORTANT DES ORGANES DE RAMASSAGE ENTRAINES HYDRAULIQUEMENT

(30) Priorität: 27.07.2000 DE 10036612
(43) Veröffentlichungstag der Anmeldung: 23.04.2003
(73) Patentinhaber: CNH Belgium N.V., 8210 Zedelgem (BE)
(72) Erfinder: HERRMANN, Erich, 01844 Neustadt (DE)
(74) Vertreter: Feldkamp, Rainer
(86) Internationale Anmeldenummer: PCT/DE2001/002724
(87) Internationale Veröffentlichungsnummer: WO 2002/009498

(56) Entgegenhaltungen:
- WO-A-01/65919
- DE-A- 3 801 343
- DE-U- 7 207 347
- FR-A- 2 536 244
- US-A- 5 901 535

## Beschreibung

Die Erfindung betrifft einen Feldhäcksler mit hydraulisch angetriebenen Einzugsorganen zur Verarbeitung landwirtschaftlicher Erntegüter, forstwirtschaftlicher Kulturen sowie für nachwachsende Rohstoffe, mit den Merkmalen nach dem Oberbegriff des Patentanspruchs 1.

Bei den gattungsgemäßen Feldhäckslern kommt es bei den Antrieben für die Einzugsorgane darauf an, möglichst eine stufenlos regelbare Zuführgeschwindigkeit der Erntegüter zur Häckseltrommel zu realisieren, im Falle des Aufspürens eines Fremdkörpers mittels einer Fremdkörper-Ortungseinrichtung die Einzugsorgane in kürzester Zeit zu stoppen und danach das den Fremdkörper enthaltende Erntegut durch Reversieren des Antriebs aus dem Feldhäcksler zu entfernen. Dazu werden seit längerer Zeit Hydromotoren mit Erfolg eingesetzt, die mit zusätzlichen mechanischen Stoppeinrichtungen zusammenwirken.
Ein derartiger Feldhäcksler ist mit der DE 30 29 050 A1 bekannt geworden, wo ein vom Antriebsmotor ausgehender Riementrieb neben einem Wurfgebläse ein Stirnrad-Schaltgetriebe antreibt, von dem einmal eine Gelenkwelle zum Antrieb der Häckseltrommel abzweigt und an das zum anderen eine verstellbare Hydraulikpumpe angeflanscht ist Diese verstellbare Hydraulikpumpe steht mit je einem Hydromotor in antriebsmäßiger Verbindung, wovon einer die als Einzugsorgan fungierenden oberen Zuführwalzen und der andere die unteren in entgegengesetzter Drehrichtung antreibt. Außerdem führt von diesem Stirnrad-Schaltgetriebe ein Riementrieb zu einem daneben angeordneten Stirnrad Wendegetriebe, in dem zwei elektromagnetisch schaltbare Kupplungen zum Vorwärts- bzw. Rückwärtslauf des Adapters untergebracht sind. Wenn die Fremdkörper-Ortungseinrichtung einen Fremdkörper erkannt hat, rückt deren Signal die beiden Kupplungen gleichzeitig ein, wodurch der Antrieb an dieser Stelle blockiert wird. An diesem Feldhäcksler ist aus der Sicht des Stopps der Einzugsorgane beim Erkennen eines Fremdkörpers zu bemängeln, dass dieser Vorgang zu lange dauert, weil durch dieses Antriebskonzept die Häckseltrommel und das Wurfgebläse unter Einwirkung der Gleitreibungsmomente der relativ kleinen Kupplungen unnötigerweise mit angehalten werden. Die Folge davon ist, dass die Fremdkörper in die immer noch rotierende Häckseltrommel gelangen und dort schwerste Schäden anrichten.

In der DE 196 32 977 A1 ist ein weiterer Feldhäcksler beschrieben, bei dem die Häckseltrommel mittels eines Riementriebes und die Einzugsorgane separat davon mit Hydro- bzw. Elektromotoren angetrieben werden. Sensoren überwachen deren Drehzahlen und übermitteln diese an eine Auswerteelektronik, die zur Einhaltung konstanter Häcksellängen bei Drehzahlschwankungen ein vorgegebenes Soll-Drehzahl-Verhältnis einstellt. Außerdem löst die Auswerteelektronik auf ein Signal der Fremdkörper-Ortungseinrichtung einen Hubmagneten aus, der eine Sperrklinke bewegt, die wiederum dadurch den Antrieb der Einzugsorgane stoppt. Mit diesem Antriebskonzept werden zwar akzeptable Stoppzeiten erreicht, aber die zur Stoppeinrichtung gehörenden Bauteile und die bis zum Ausschalten des Antriebes ansprechende Überlastkupplung sind einer starken Belastung und damit einem erhöhten Verschleiß ausgesetzt, was sich negativ auf deren Lebensdauer auswirkt. Da die Stoppeinrichtung und die Überlastkupplung ausschließlich nur zum beschriebenen Zweck da sein müssen, erhöhen sich die Herstellungskosten.

Aus dem deutschen Gebrauchsmuster ist ein Feldhäcksler bekannt geworden, dessen Einzugsorgane mit je einem reversierbaren Hydromotor für die oberen und die unteren Zuführwalzen angetrieben werden. Dazu dient eine nicht verstellbare Hydraulikpumpe, deren Fördermenge zur stufenlosen Veränderung der Einzugsgeschwindigkeit der Zuführwalzen und demzufolge der Häcksellänge mittels eines Drosselventils in der Ansaugleitung verstellt werden kann. Ein zwischen der Hydraulikpumpe und den Hydromotoren angeordnetes elektrisch gesteuertes Hauptsteuerventil dient einmal zur Drehrichtungsänderung der Hydromotoren und zum anderen ist es auf ein Signal einer Fremdkörper-Ortungseinrichtung auch in der Lage, die Zulauf- und die Ablaufleitung zu den Hydromotoren zum Zwecke des sofortigen Stopps der Einzugsorgane abzusperren. In dem Fall fließt das von der Hydraulikpumpe weiter geförderte Hydrauliköl über eine Bypassleitung zurück in den Ölbehälter. Nachteilig an diesem Feldhäcksler ist, dass die Zeit bis zum Stopp der Einzugsorgane zu lang ist, da die Elektromagnete des Hauptsteuerventils zu langsam reagieren. Das wirkt sich bei den heutigen leistungsstarken Feldhäckslern besonders nachteilig aus, da die Hydraulikmotoren der Zuführorgane wegen der großen Antriebsleistung mit großen Fördermengen und hohen Förderdrücken arbeiten, so dass diese bis zum Stopp der Einzugsorgane noch mehr Zeit benötigen. Darüber hinaus unterliegen die Hydromotoren und die Hydraulikleitungen beim Stoppvorgang sehr hohen Belastungen, so dass auch ihre Lebensdauer sinkt.

Bei dem Feldhäcksler nach der DE 33 41 071 A1 ist eine Verbesserung des Erkennungsverhaltens über das tatsächliche Vorhandensein von Fremdkörpern vorgesehen. Der hydraulische Antrieb einschließlich des Stopps für die Einzugsorgane ist völlig identisch, so dass dafür uneingeschränkt auch die gleichen Nachteile gelten.

In der WO-A-0165919, die einen Stand der Technik nach Artikel 54(3) darstellt, ist ein Feldhäcksler der eingangs genannten Art beschrieben, bei dem der Hydraulikkreislauf als geschlossener Hydraulikkreislauf ausgebildet ist, in dessen Niederdruckleitung ein Hauptsteuerventil zum Unterbrechen des Flusses des Hydrauliköls in der Niederdruckleitung von den Hydromotoren angeordnet ist. Das Hauptsteuerventil steht zu seiner Schaltung mit wenigstens einem Vorsteuer-Wegeventil in Verbindung, um ein schnelles Schalten bei großem Volumen zu erreichen. Weiterhin sind Bypass-Ventile vorgesehen, die Druckspitzen bei der Unterbrechung des Flusses des Hydrauliköls dämpfen sollen.

Der Erfindung liegt die Aufgabe zugrunde, einen Feldhäcksler der eingangs genannten Art mit hydraulisch angetriebenen Einzugsorganen zu schaffen, bei dem der Stopp der Einzugsorgane im Fall der Aufnahme von Fremdkörpern in kürzester Zeit möglich ist und dessen am Stoppvorgang beteiligte Bauteile nur geringen Belastungen und damit einem verminderten Verschleiss unterliegen.

Durch die antriebsmäßige Verbindung des Antriebsmotors des Feldhäckslers mit der Hydraulikpumpe im Antriebssystem für die Walzen der Einzugsorgane wird diese in Rotation versetzt, so daß sie entsprechend der an sie vermittelten Befehle einen Hydraulikölfluß erzeugt, der den oder die Hydromotoren zum Antrieb der Walzen mit einer vorbestimmten Drehzahl in die gewünschte Drehrichtung in Rotation versetzt. Das sich im Hydraulikkreislauf befindende Hauptsteuerventil dient dazu, durch die Einnahme verschiedener Schaltstellungen entweder diesen Hydraulikölfluß im Normalbetrieb aufrecht zu erhalten bzw. ihn zu unterbrechen, wenn eine Fremdkörper- Ortungseinrichtung infolge der Aufnahme eines Fremdkörpers ein dementsprechendes Signal erzeugt hat. Zur Veränderung seiner Schaltstellung steht das Hauptsteuerventil erfindungsgemäß mit einem Vorsteuer- Wegeventil in Verbindung, das in einer ersten Schaltstellung zur Aufrechterhaltung des Normalbetriebes einen anderweitig anliegenden Steuerdruck, beispielsweise vom Fahrantrieb, an das Hauptsteuerventil weiterleitet. Das macht es so lange, wie der Magnet seiner Stelleinheit unter dem Einfluß der anliegenden Bordspannung steht Wenn jedoch von der Fremdkörper-Ortungseinrichtung ein Signal wegen eines aufgenommenen Fremdkörpers kommt, wird durch deren elektrische Verbindung mit der Stelleinheit des Vorsteuer- Wegeventils die bisher anliegende Bordspannung unterbrochen und es nimmt seine zweite Schaltstellung ein, in der es die Zufuhr des Steuerdruckes an das Hauptsteuerventil unterbricht. Daraufhin bewegt sich das Hauptsteuerventil unter der Einwirkung seiner Feder in die zweite Schaltstellung, wodurch der Hydraulikölfluß durch die Hydromotoren unterbrochen wird.
In einer zweckmäßigen Ausführung der Erfindung ist der Hydraulikkreislauf als geschlossener Hydraulikkreislauf ausgebildet, bei dem das Hauptsteuerventil im Falle des Vorwärtslaufes der Walzen der Einzugsorgane in die Niederdruckleitung eingeordnet ist. In diesem als Normalbetrieb definierten Fall fließt das Hydrauliköl von der Hydraulikpumpe über die Hochdruckleitung zum Hydromotor und von da aus über die sich daran anschließende Niederdruckleitung durch das Hauptsteuerventil hindurch und danach zurück zur Hydraulikpumpe. Wenn jedoch ein Signal von der Fremdkörper- Ortungseinrichtung kommt, wird das Hauptsteuerventil über das Vorsteuer- Wegeventil im vorstehend beschriebenen Sinne umgeschaltet und der weitere Fluß des Hydrauliköles in der Niederdruck leitung vom Hydromotor zur Hydraulikpumpe wird unterbrochen. Der Hydromotor stützt sich in dem Augenblick auf der abgesperrten Hydraulikölsäule in der Niederdruckleitung ab. Gleichzeitig öffnet das Hauptsteuerventil eine Bypaßleitung, die die Hochdruckleitung mit der Niederdruckleitung verbindet, so daß der weitere Hydraulikölfluß am Hydromotor vorbei geleitet wird.
Damit im Moment der Absperrung der Niederdruckleitung die Druckerhöhung darin infolge der Massenträgheit des Hydrauliköles nicht zu groß wird, hat es sich bewährt, dem Hauptsteuerventil im Bypaß ein als Schockventil ausgebildetes Druckbegrenzungsventil zuzuordnen. Die so verwirklichte Druckbegrenzung verhindert die Überlastung der am Antrieb beteiligten Bauteile. Da diese Druckbegrenzung in einem festem Verhältnis zur Stoppzeit steht, kann sie exakt auf die für jeden Feldhäckslertyp notwendige Stoppzeit ausgerichtet werden.
In einer weiteren bevorzugten Ausgestaltung der Erfindung ist die Hydraulikpumpe mit einer elektrisch /hydraulischen Stelleinrichtung ausgestattet, die auf das Signal der Fremdkörper- Ortungseinrichtung beim Auftreten eines Fremdkörpers die Hydraulikpumpe auf "Null" stellt, wodurch die Zirkulation des Hydrauliköls über die Bypaßleitung aufhört. Des weiteren hat es sich als zweckmäßig erwiesen, im geschlossenen Hydraulikkreislauf eine Spüleinrichtung zur Wärmeabfuhr aus dem Hydromotor vorzusehen, die in Richtung des Hydrauukölflusses gesehen vor dem Hauptsteuerventil angeordnet sein sollte, weil anderenfalls die Stoppzeit durch weiteren Abfluß des Hydrauliköls durch den Spülschieber unnötig verlängert würde.
Eine weitere bewährte Ausgestaltung der Erfindung wird darin gesehen, den Hydraulikkreislauf zum Antrieb der Einzugsorgane als offenen Hydraulikkreislauf auszubilden. Hier ist das Hauptsteuerventil in bekannter Weise mit der von der Hydraulikpumpe kommenden Druckleitung sowie der Rücklaufleitung verbunden, wobei erfindungsgemäß dessen Schaltung in die Schaltstellungen "Vorwärtslauf", "Rückwärtslauf" und "Stopp" der Walzen der Einzugsorgane von zwei Vorsteuer- Wegeventilen übernommen wird. Da die Verbindung zwischen den Vorsteuer- Wegeventilen und dem Hauptsteuerventil, die Nutzung des Steuerdruckes beispielsweise vom Fahrantrieb sowie die elektrische Verbindung der Vorsteuer- Wegeventile mit der Fremdkörper- Ortungseinrichtung analog wie beim geschlossenen Hydraulikkreislauf vorhanden sind, bedarf es an dieser Stelle keiner weiteren Erläuterungen. Ebenso verbält es sich mit der elektrisch/hydraulischen Stelleinrichtung an der Hydraulikpumpe und deren elektrische Verbindung zur Fremdkörper- Ortungseinrichtung.
Zusammenfassend stellen sich die Vorteile der Erfindung so dar, daß im Falle des Stopps der Einzugsorgane durch das Erkennen eines Fremdkörpers äußerst kurze Stoppzeiten zu verwirklichen sind, wobei die am Antrieb beteiligten Bauteile nur geringen Belastungen ausgesetzt sind und demzufolge auch nur einen geringen Verschleiß aufweisen.

Die Erfindung soll nun anhand von zwei Ausführungsbeispielen näher erläutert werden, wobei die einzelnen Figuren zeigen:
- Fig. 1:: eine teilweise schematische Darstellung eines Feldhäckslers mit hydraulisch angetriebenen Zuführorganen
- Fig. 2:: eine Draufsicht von Fig. 1
- Fig. 3:: ein Schaltbild des hydraulischen Antriebs der Zuführorgane als geschlossener Hydraulikkreislauf im Falle des Vorwärts- oder Rück wärtslaufes der Walzen
- Fig. 4:: ein Schaltbild wie in Fig. 3 im Falle des Stopps der Walzen
- Fig. 5:: ein Schaltbild des hydraulischen Antriebs der Zuführorgane als offener Hydraulikkreislauf im Falle des Stopps der Walzen

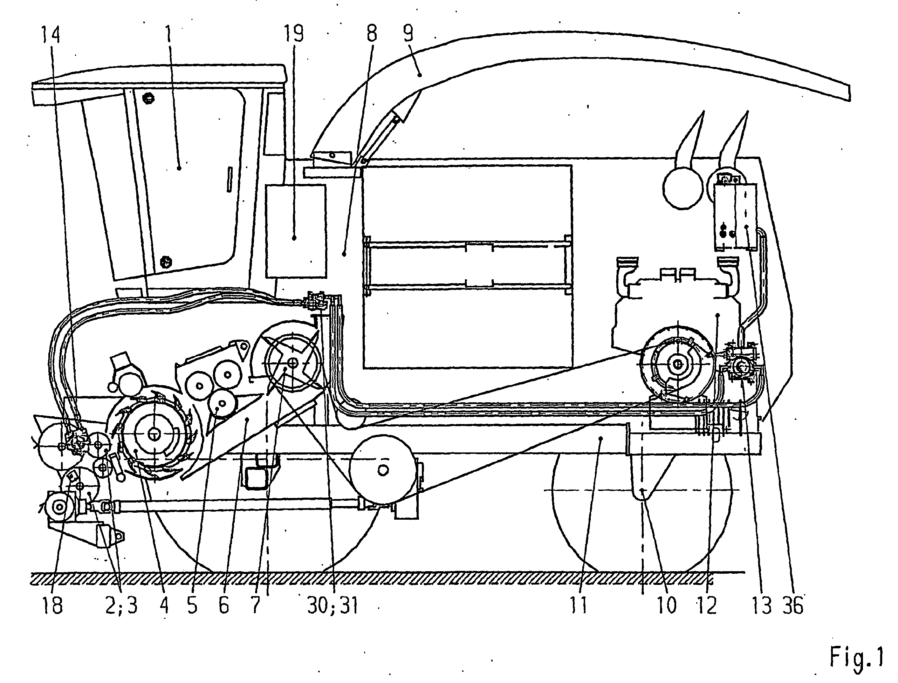

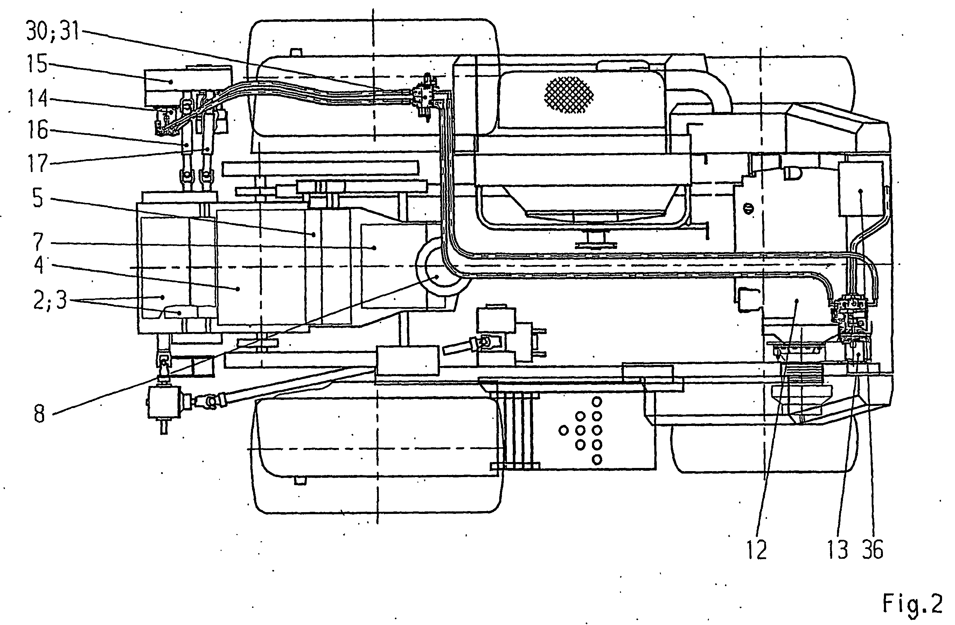

Die Grundmaschine des in den Figuren 1 und 2 dargestellten Feldhäckslers weist im Frontbereich unter der Fabrerkabine 1 ein Häckselaggregat auf, dessen Einzugsorgane 2 in Form von gegenläufig rotierenden Walzen 3 ausgebildet sind, die hydraulisch angetrieben werden. In hinteren Teil des Häckselaggregates ist die Häckseltrommel 4 untergebracht In Flußrichtung des Häckselgutes durch den Feldhäcksler gesehen befindet sich hinter dem Häckselaggregat eine Aufbereitungseinrichtung 5 bzw. ein Graskanal 6, die entsprechend der Art des Häckselgutes wahlweise eingesetzt werden. Danach folgt das Wurfgebläse 7 zur Weiterleitung des Häckselgutes durch den Auswurfschacht 8 und den Auswurfbogen 9.
Im rückwärtigen Bereich des Feldhäckslers ist oberhalb seiner Hinterachse 10 auf dem Rahmen 11 der Antriebsmotor 12 angeordnet. An sein Gehäuse ist eine Hydraulikpumpe 13 angeflanscht, die mit der Abtriebsseite des Antriebsmotors 12 in antriebsmäßiger Verbindung steht. Sie ist mittels Hydraulikschlauchleitungen mit einem Hydromotor 14 verbunden, der auf die Eingangswelle des Häcksellängenschaltgetriebes 15 aufgesteckt ist. Von dessen einer Ausgangswelle führt eine Gelenkwelle 16 zum Antriebsritzel für die oberen Walzen 3 der Einzugsorgane 2 und eine weitere Gelenkwelle 17 mit entgegengesetzter Drehrichtung zum Antriebsritzel der unteren Walzen 3. In die vordere untere Walze 3 ist eine Fremdkörper- Ortungseinrichtung 18 eingebaut, deren Elektronik 19 beim Erkennen irgend eines Fremdkörpers ein Signal erzeugt.

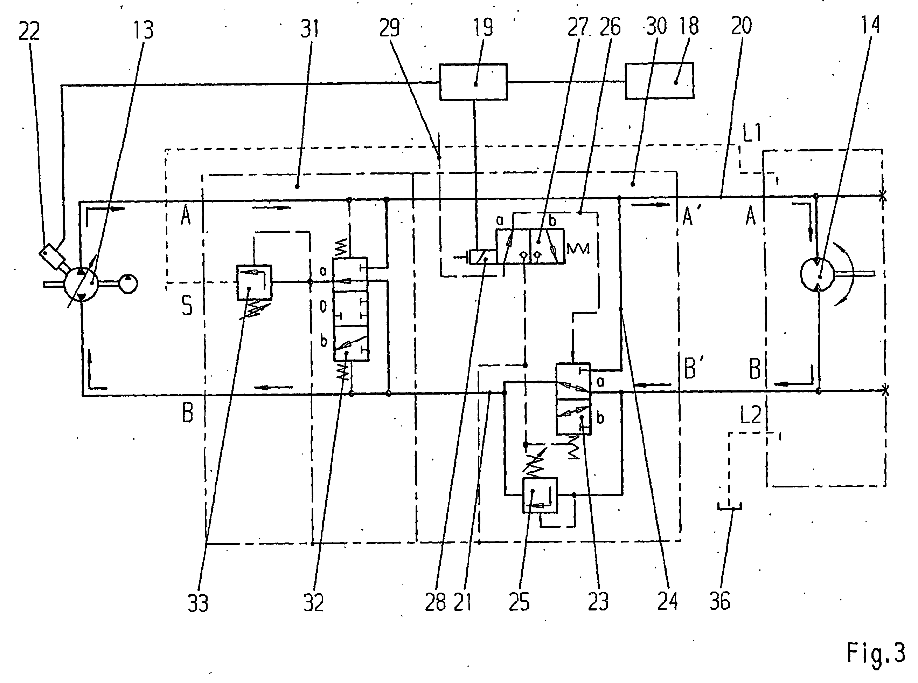

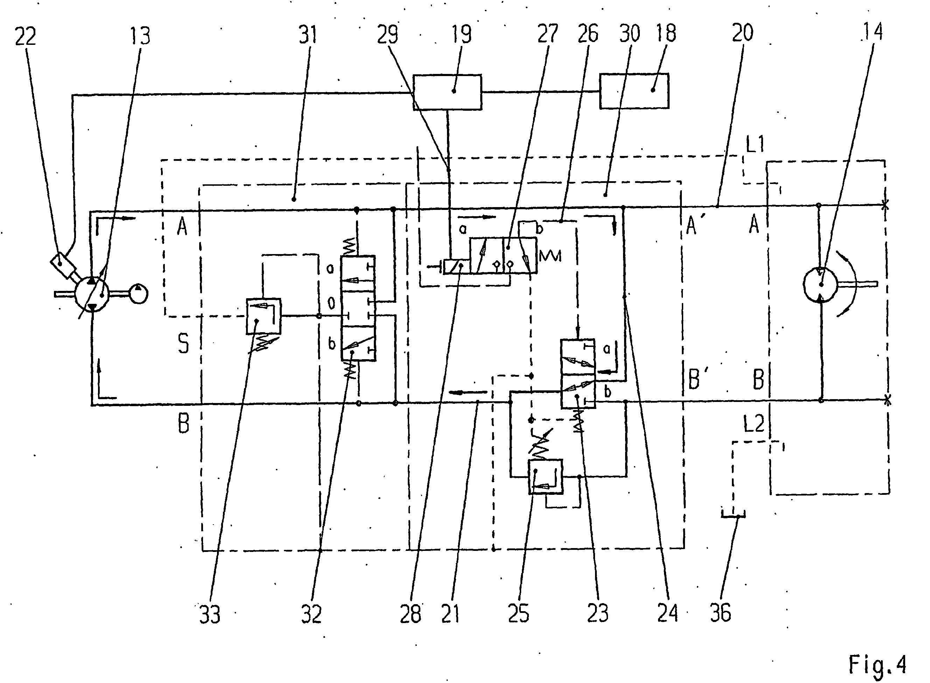

Das erste Ausführungsbeispiel für den hydraulischen Antrieb der Walzen 3 als geschlossener Hydraulikkreislauf ist in den Figuren 3 und 4 gezeigt. In Figur 3 ist die mit Pfeilen ausgewiesene Richtung des Hydraulikkölflusses für den Fall des Vorwärts- bzw. Rückwärtslaufes der Walzen 3 zu sehen und in Figur 4 für den Stoppfall unmittelbar nach dem Erkennen eines Fremdkörpers. Dabei ist die Hydraulikpumpe 13 einmal über eine Hochdruckleitung 20 und zum anderen mittels einer Niederdruckleitung 21 mit dem Hydromotor 14 verbunden. Sie ist mit einer elektrisch/hydraulischen Stelleinrichtung 22 zur Veränderung der Menge und der Strömungsrichtung des Hydraulikölflusses ausgestattet, die darüber hinaus zur Elektronik 19 der Fremdkörper- Ortungseinrichtung 18 elektrischen Kontakt hat.
In die Niederdruckleitung 21 ist ein Hauptsteuerventil 23 eingeschaltet, das zusätzlich mit einer mit der Hochdruckleitung 20 an einer Stelle vor dem Hydromotor 14 verbundenen Bypaßleitung 24 in Verbindung steht. Dem Hauptsteuerventil 23 ist im Bypaß noch ein als Schockventil ausgebildetes Druckbegrenzungsventil 25 zugeordnet. Zu seiner Schaltung ist das Hauptsteuerventil 23 über einen Verbindungskanal 26 mit einem Vorsteuer- Wegeventil 27 verbunden, dessen Stelleinheit 28 mit der Elektronik 19 der Fremdkörper- Ortungsein richtung 18 in elektrischem Kontakt ist Außerdem steht das Vorsteuer- Wegeventil 27 über eine Steuerölleitung 29 mit dem Hydraulikkreislauf des nicht gezeigten Fahrantriebes in Verbindung. Das Hauptsteuerventil 23, das Druckbegrenzungsventil 25 und das Vorsteuer- Wegeventil 27 sind in einem gemeinsamen Gehäuse untergebracht und bilden so das Stoppventil 30. Schließlich befindet sich im geschlossenen Hydraulikkreislauf dieses ersten Ausfuhrungsbeispiels in Richtung des Hydraulikölflusses gesehen vor dem Hauptsteuerventil 23 eine sogenannte Spüleinrichtung 31, die aus einem Spülschieber 32 und einem Spüldruckbegrenzungsventil 33 besteht, die ebenfalls in einem gemeinsamen Gehäuse untergebracht sind. Sowohl das Stoppventil 30 als auch die Spüleinrichtung 31 können in zweckmäßiger Weise ebenfalls in einem gemeinsamen Gehäuse vereint sein.

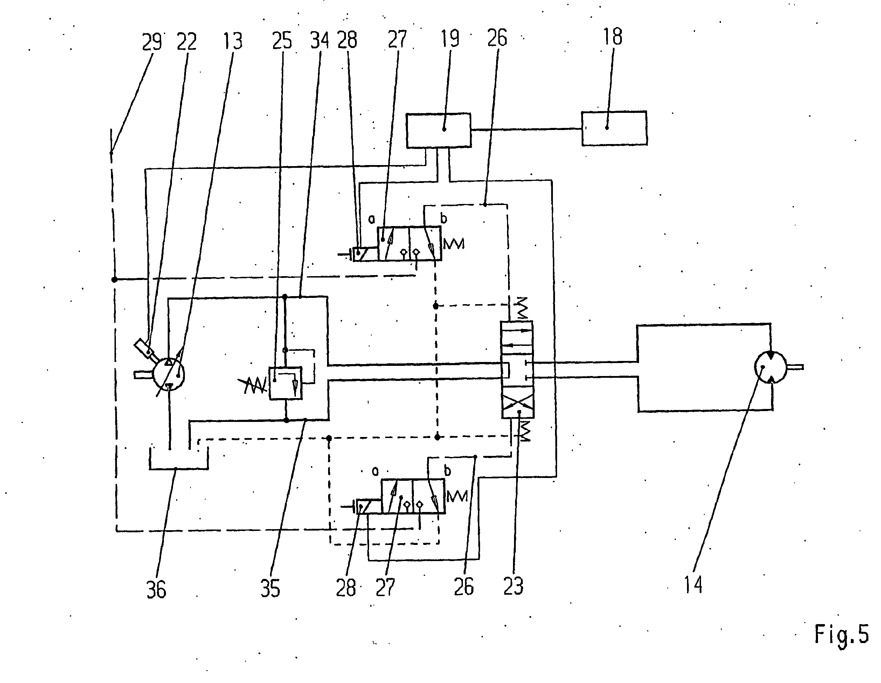

In Figur 5 ist ein zweites Ausführungsbeispiel für den hydraulischen Antrieb der Walzen 3 dargestellt, der als offener Hydraulikkreislauf ausgebildet ist. Er befindet sich gerade in der Stoppstellung der Walzen 3, kurz nachdem die Fremdkörper- Ortungseinrichtung 18 das Vorhandensein eines Fremdkörpers signalisiert hat. Hier ist die Hydraulikpumpe 13 einmal über eine Druckleitung 34 mit dem Hauptsteuerventil 23 verbunden, von dem aus eine Rücklaufleitung 35 zurück zum Hydraulikölbehälter 36 führt. Zwischen der Druckleitung 34 und der Rücklaufleitung 35 ist ein Druckbegrenzungsventil 25 angeordnet Vom Hauptsteuerventil 23 gehen die wechselseitig als Druckleitung 34 und als Rücklaufleitung 35 fungierenden Leitungen zum die Walzen 3 antreibenden Hydromotor 14. Auch hier ist wie beim ersten Ausführungsbeispiel die Hydraulikpumpe 13 mit einer elektrisch/ hydraulischen Stelleinrichtung 22 zur Veränderung der Menge des Hydraulikölflusses ausgestattet, die auch noch mit der Elektronik 19 der Fremdkörper- Ortungseinrichtung 18 elektrischen Kontakt hat.
Zur Schaltung des Hauptsteuerventils 23 sind in dem Fall zwei Vorsteuer- Wegeventile 27 vorgesehen, die mit diesem über je einen separaten Verbindungskanal 26 verbunden sind. Jedes Vorsteuer- Wegeventil 27 steht auch noch mit seiner Stelleinheit 28 mit der Elektronik 19 der Fremdkörper- Ortungseinrichtung 18 in elektrischem Kontakt und sie werden außerdem noch über eine Steuerölleitung 29 mit dem Hydrauliköldruck des nicht gezeigten hydraulischen Fahrantriebes beaufschlagt.

## Patentansprüche

1. Feldhäcksler mit hydraulisch angetriebenen Einzugsorganen mittels eines Hydraulikkreislaufes, bei dem:
die als Walzen (3) ausgebildeten Einzugsorgane (2) mit einem oder mehreren Hydromotoren (14) in antriebsmäßiger Verbindung stehen,
eine direkt oder indirekt vom Antriebsmotor (12) des Feldhäckslers angetriebene Hydraulikpumpe (13) zum Antrieb der Hydromotoren (14) vorgesehen ist,
sich im Hydraulikkreislauf wenigstens ein Hauptsteuerventil (23) zum Unterbrechen bzw. zum Freigeben des Hydraulikölflusses durch die Hydromotoren (14) befindet,
das Hauptsteuerventil (23) in Abhängigkeit vom Signal einer Fremdkörper-Ortungseinrichtung (18) auf Unterbrechen bzw. Freigeben des Hydraulikölflusses durch die Hydromotoren (14) schaltbar ist,
das Hauptsteuerventil (23) zu seiner Schaltung mit wenigstens einem Vorsteuer-Wegeventil (27) in Verbindung steht,
die Fremdkörper-Ortungseinrichtung (18) mit der Stelleinheit (28) des Vorsteuer-Wegeventils (27) elektrisch verbunden ist,
wobei der Hydraulikkreislauf als geschlossener Hydraulikkreislauf ausgebildet ist, in dessen Niederdruckleitung (21) das Hauptsteuerventil (23) eingeordnet ist, das bei einem Signal von der Fremdkörper-Ortungseinrichtung (18) den Fluß des Hydrauliköls in der Niederdruckleitung (21) unterbricht,
**dadurch gekennzeichnet, dass** das Hauptsteuerventil (2) gleichzeitig mit der Unterbrechung des Flusses des Hydrauliköls in der Niederdruckleitung (21) eine Bypaßleitung (24) öffnet, die mit der Hochdruckleitung (20) an einer Stelle vor den Hydromotoren (14) verbunden ist.

2. Feldhäcksler nach den Ansprüchen 1, **dadurch gekennzeichnet, dass** dem Hauptsteuerventil (23) im Bypass ein als Schockventil ausgebildetes Druckbegrenzungsventil (25) zugeordnet ist.

3. Feldhäcksler nach Anspruch 1 oder 2, **dadurch gekennzeichnet, dass** die Hydraulikpumpe (13) mit einer elektrisch/hydraulischen Stelleinrichtung (22) ausgerüstet ist, die mit der Fremdkörper-Ortungseinrichtung (18) elektrisch verbunden ist.

4. Feldhäcksler nach den Ansprüchen 1 bis 3, **dadurch gekennzeichnet, dass** im Hydraulikkreislauf in Richtung des Hydraulikölflusses gesehen vor dem Hauptsteuerventil (23) eine Spüleinrichtung (31) angeordnet ist.

5. Feldhäcksler nach den Ansprüchen 1 bis 4, **dadurch gekennzeichnet, dass** das Vorsteuer-Wegeventil (27) über eine Steuerölleitung (29) mit dem Hydraulikkreislauf des Fahrantriebes in Verbindung steht.

## Claims

1. Forage harvester with intake devices driven hydraulically by means of a hydraulic circuit, in which:
the intake devices (2) in the form of rollers (3) have a motive connection to one or more hydraulic motors (14);
a hydraulic pump (13), driven directly or indirectly by the engine (12) of the forage harvester, is provided to drive the hydraulic motors (14);
at least one main control valve (23) for interrupting and releasing the flow of hydraulic fluid through the hydraulic motors (14) is located in the hydraulic circuit;
the main control valve (23) can be moved to interrupt and release the flow of hydraulic fluid through the hydraulic motors (14) as a function of a signal from a foreign body detector (18);
the main control valve (23) is connected to at least one directional pilot valve (27) so that it may be moved;
the foreign body detector (18) is electrically connected to the actuator (28) of the directional pilot valve (27);
whereby the hydraulic circuit takes the form of a dosed circuit, in the low-pressure pipe (21) of which the main control valve (23) is located, which interrupts the flow of hydraulic fluid in the low-pressure pipe (21) in response to a signal from the foreign body detector (18);
**characterised in that** the main control valve (2) simultaneously opens a bypass pipe (24) connected to the high-pressure pipe (20) at a point upstream of the hydraulic motors (14) when it interrupts the flow of hydraulic fluid in the low-pressure pipe (21).

2. Forage harvester in accordance with claim 1, **characterised in that** a pressure relief valve (25) in the form of a shock valve in the bypass is allocated to the main control valve (23).

3. Forage harvester in accordance with claim 1 or 2, **characterised in that** the hydraulic pump (13) is fitted with an electro-hydraulic actuator (22), which is electrically connected to the foreign body detector (18).

4. Forage harvester in accordance with claims 1 to 3, **characterised in that** a scavenging device (31) is located upstream of the main control valve (23) in the hydraulic circuit, seen in the direction of flow of the hydraulic fluid.

5. Forage harvester in accordance with claims 1 to 4, **characterised in that** the pilot directional valve (27) is connected to the hydraulic circuit of the transmission system by a pilot fluid pipe (29).

## Revendications

1. Récolteuse-hacheuse avec des organes d'introduction à commande hydraulique au moyen d'un circuit hydraulique, dans laquelle :
les organes d'introduction (2) ayant la forme de rouleaux (3) sont en liaison de commande avec un ou plusieurs moteurs hydrauliques (14),
une pompe hydraulique (13) commandée directement ou indirectement par le moteur d'entraînement (12) de la récolteuse-hacheuse est prévue pour l'entraînement des moteurs hydrauliques (14),
au moins une vanne de commande principale (23) se trouve dans le circuit hydraulique pour l'interruption ou pour la libération du flux du liquide hydraulique par les moteurs hydrauliques (14),
la vanne de commande principale (23) est commutable par les moteurs hydrauliques (14) en fonction du signal d'un dispositif de détection de corps étrangers (18) pour l'interruption ou la libération du flux de liquide hydraulique,
la vanne de commande principale (23) est en liaison, pour sa commutation, avec au moins un distributeur pilote (27),
le dispositif de détection de corps étrangers (18) est relié électriquement avec l'unité de réglage (28) du distributeur pilote (27),
dans laquelle le circuit hydraulique a la forme d'un circuit hydraulique fermé dans la conduite basse pression (21) duquel la vanne de commande principale (23) est disposée, laquelle, en cas de signal du dispositif de détection de corps étrangers (18) interrompt le flux du liquide hydraulique dans la conduite basse pression (21),
**caractérisée en ce que** la vanne de commande principale (2) ouvre en même temps que l'interruption du flux du liquide hydraulique dans la conduite basse pression (21) une conduite de dérivation (24) qui est reliée avec la conduite haute pression (20) en un point situé devant les moteurs hydrauliques (14).

2. Récolteuse-hacheuse selon la revendication 1, **caractérisée en ce qu'**un limiteur de pression (25) ayant la forme d'une vanne de choc est associé à la vanne de commande principale (23) dans la dérivation.

3. Récolteuse-hacheuse selon la revendication 1 ou 2, **caractérisée en ce que** la pompe hydraulique (13) est équipée d'un dispositif de réglage électronique/hydraulique (22) qui est relié électriquement au dispositif de détection de corps étrangers (18).

4. Récolteuse-hacheuse selon les revendications 1 à 3, **caractérisée en ce qu'**un dispositif de balayage (31) est disposé devant la vanne de commande principale (23) dans le circuit hydraulique, vu dans le sens d'écoulement du liquide hydraulique.

5. Récolteuse-hacheuse selon les revendications 1 à 4, **caractérisée en ce que** le distributeur pilote (27) est en relation avec le circuit hydraulique de la commande de marche via une conduite de liquide de direction (29).
